# EUROPÄISCHE PATENTSCHRIFT

(11) **EP 3 175 952 B1**
(45) Veröffentlichungstag und Bekanntmachung des Hinweises auf die Patenterteilung: **31.07.2024**
(21) Anmeldenummer: 16202450.9
(22) Anmeldetag: 01.06.2012
(51) Int. Cl.: B24B 3/40, B24B 3/46, B24B 49/12, B26D 7/00

(54) **VORRICHTUNG UND VERFAHREN ZUM SCHLEIFEN VON ROTATIONSMESSERN**
DEVICE AND METHOD FOR GRINDING ROTATION BLADES
DISPOSITIF ET PROCÉDÉ DE FABRICATION D'AFFÛTAGE DE COUTEAUX TOURNANT

(30) Priorität: 06.06.2011 DE 102011103418; 20.03.2012 DE 102012005566
(43) Veröffentlichungstag der Anmeldung: 07.06.2017
(62) Teilanmeldung aus: 12170398.7
(73) Patentinhaber: Weber Food Technology GmbH, 35236 Breidenbach (DE)
(72) Erfinder:
(74) Vertreter: Manitz Finsterwald Patent- und Rechtsanwaltspartnerschaft mbB

(56) Entgegenhaltungen:
- WO-A2-2007/097724
- DE-A1- 10 012 445
- DE-A1- 102005 013 363
- FR-A1- 2 847 841
- US-A1- 2009 244 528

## Beschreibung

Die vorliegende Erfindung betrifft eine Vorrichtung zum Schleifen von Rotationsmessern, insbesondere Sichel- oder Kreismessern, insbesondere für Maschinen zum Aufschneiden von Lebensmittelprodukten, gemäß dem Oberbegriff des Anspruchs 1 sowie ein Verfahren zum Schleifen von Rotationsmessern mit den Merkmalen des Anspruchs 15.

Eine derartige Vorrichtung ist aus DE 10 2005 013 363 A1 bekannt.

Rotationsmesser werden in Maschinen zum Aufschneiden von Lebensmittelprodukten, die auch als Slicer bezeichnet werden, eingesetzt. Dabei nutzen sich die Rotationsmesser ab und werden stumpf, so dass sie geschliffen werden müssen. Bei bekannten Schleifvorrichtungen für Rotationsmesser wird eine Kopierplatte verwendet, die eine Kopie des zu schleifenden Messertyps ist. Um ein zum Messertyp gehörendes Rotationsmesser zu schleifen, wird die an der Kopierplatte vorhandene Schneide abgefahren. Diese "Abfahrbewegung" wird über eine Kopiereinrichtung an ein Schleifwerkzeug übertragen, das die Schneide des Rotationsmessers entsprechend abfährt und das Rotationsmesser dabei schleift.

Nachteilig hieran ist, dass - insbesondere wenn mehrere verschiedene Messertypen mit einer Schleifvorrichtung geschliffen werden sollen - für jeden Messertyp eine separate Kopierplatte vorgehalten werden muss. Dadurch fallen nicht nur Kosten an. Vielmehr kann sich auch der zum Schleifen eines Rotationsmessers benötigte Zeitaufwand dadurch erhöhen, dass die für das zu schleifende Rotationsmesser benötigte Kopierplatte an der Schleifvorrichtung angebracht werden muss, bevor mit dem Schleifen begonnen werden kann. Weiterhin ist nachteilig, dass eine Kopierplatte nur eine "Kopie" eines unbenutzten Rotationsmessers ist. Benutzungsbedingte Abnutzungen und/oder Besonderheiten an der Schneide des zu schleifenden Rotationsmessers sind bei der Kopierplatte somit nicht berücksichtigt. Dies kann zu einem nicht optimalen Schleifergebnis führen.

Der vorliegenden Erfindung liegt die Aufgabe zugrunde, eine Möglichkeit anzugeben, durch die ein Rotationsmesser in verbesserter Art und Weise geschliffen werden kann.

Die Aufgabe wird jeweils durch eine Vorrichtung mit den Merkmalen der unabhängigen Ansprüche gelöst. Bevorzugte Weiterbildungen und Ausgestaltungen der Erfindung sind in den abhängigen Ansprüchen angegeben.

Eine erfindungsgemäße Vorrichtung zum Schleifen von Rotationsmessern, insbesondere Sichel- oder Kreismessern, insbesondere für Maschinen zum Aufschneiden von Lebensmittelprodukten, umfasst wenigstens eine Aufnahme für ein Rotationsmesser, an der das Rotationsmesser anbringbar ist, zumindest ein Schleifwerkzeug, wobei das Schleifwerkzeug und das in der Aufnahme angebrachte Rotationsmesser derart relativ zueinander bewegbar sind, dass eine am Umfang des Rotationsmessers verlaufende Schneide vom Schleifwerkzeug geschliffen werden kann,
Die Vorrichtung umfasst eine Schwenkeinrichtung für das Schleifwerkzeug, wobei die Schwenkeinrichtung derart ausgebildet ist, dass das Schleifwerkzeug um eine Schwenkachse schwenkbar ist, die durch einen Schleifpunkt verläuft, an welchem sich die Schneide und das Schleifwerkzeug während des Schleifvorgangs berühren.

Das Schleifwerkzeug umfasst eine Schleifscheibe, die die Schneide am Schleifpunkt berührt und um die Schwenkachse verschwenkbar ist. Durch die Verschwenkbarkeit der Schleifscheibe um die durch den Schleifpunkt verlaufende Schwenkachse kann der Schleifwinkel auf einfache Weise eingestellt und insbesondere auch während des Schleifvorgangs verändert werden, wobei als Schleifwinkel der Winkel zwischen der Schleifscheibe und der Schneide bezeichnet wird. Es ist somit zum Beispiel möglich, den Schleifwinkel während des Schleifvorgangs in Abhängigkeit von einem ermittelten oder vorgegebenen Schneidenverlauf einzustellen.

Das Schleifwerkzeug umfasst eine Abziehscheibe, die zusammen mit der Schleifscheibe zumindest annähernd eine V-förmige Aufnahme für das Rotationsmesser bildet und die Schneide an einem Abziehpunkt berührt. Durch die Abziehscheibe können zum Beispiel durch den Schleifvorgang entstehende Grate von der Schneide entfernt werden. Dabei ist es vorteilhaft, wenn die Abziehscheibe gemeinsam mit der Schleifscheibe und/oder unabhängig von der Schleifscheibe um die Schwenkachse verschwenkbar ist, so dass der Abziehwinkel, den die Abziehscheibe mit der Schneide einschließt, insbesondere während des Schleifvorgangs verändert und beispielsweise in Abhängigkeit des ermittelten Schneidenverlaufs eingestellt werden kann. Besonders vorteilhaft ist es, wenn der Abziehpunkt ebenfalls durch die Schwenkachse verläuft, da dann der Abziehpunkt nicht oder nur geringfügig auf der Abziehscheibe "wandert", wenn diese verschwenkt wird.

Vorzugsweise sind die Schleifscheibe und die Abziehscheibe längs der Schwenkachse versetzt zueinander angeordnet, insbesondere derart, dass die beiden Scheiben bezogen auf die Schwenkachse unmittelbar einander gegenüberstehen. Beispielsweise können die beiden Scheiben unter Ausbildung der V-förmigen Aufnahme längs der Schwenkachse direkt nebeneinander angeordnet sein, so dass sie sich berühren oder nur einen geringfügigen Abstand voneinander aufweisen (zum Beispiel ein Abstand von weniger als 5 Millimetern).

Nach einer Weiterbildung der Erfindung sind das Rotationsmesser und das Schleifwerkzeug derart relativ zueinander positionierbar, dass, insbesondere während des Schleifvorgangs, die Schwenkachse tangential zur am jeweiligen Schleifpunkt vorhandenen Schneidkante ausgerichtet ist. Auf diese Weise wird ein besonders gutes Schleifergebnis erzielt.

Die Schwenkeinrichtung für das Schleifwerkzeug weist wenigstens ein Drehlager auf, dessen Drehachse mit der Schwenkachse des Schleifwerkzeugs zusammenfällt. Dadurch kann die Schleifeinrichtung auf einfache Weise mittels des Drehlagers während des Schleifens geschwenkt und der Schleifwinkel zwischen der Schleifscheibe und der Schneide optimal angepasst werden. Dies ist insbesondere bei Rotationsmessern vorteilhaft, deren Schneide einen variablen Schneidenwinkel aufweist. Der Schneidenwinkel ist dabei der Winkel, den die Schneidenfläche der Schneide mit einer senkrecht zur Drehachse des Rotationsmessers verlaufenden Schneidebene einschließt. Ein Messer mit variablem Schneidenwinkel ist zum Beispiel aus der WO 2009/027080 A1 bekannt. Das Vorsehen eines Drehlagers, das eine mit der Schwenkachse zusammenfallende Drehachse umfasst, hat den Vorteil, dass das Schleifwerkzeug durch eine um die Drehachse erfolgende Drehbewegung äußerst präzise und störungsunanfällig um den Schleifpunkt geschwenkt und damit der Schleifwinkel während des Schleifvorgangs auf einfache Weise angepasst werden kann.

Die Schleifscheibe und die Abziehscheibe sind jeweils an einem Schwenkarm angebracht, wobei beide Schwenkarme am Drehlager befestigt sind. Mittels der Schwenkarme können die beiden Scheiben auf konstruktiv einfache Weise am Drehlager verschwenkbar befestigt werden.

Vorteilhaft ist es, wenn die beiden Scheiben zum gemeinsamen Verschwenken um die gemeinsame Drehachse des Drehlagers drehbar sind. Die Schleifscheibe und die Abziehscheibe lassen sich somit bezüglich der Schleif- und Abziehpunkte verschwenken, was wiederum beim Schleifen und Abziehen von Rotationsmessern mit variablem Schneidenwinkel vorteilhaft ist.

Jeder Schwenkarm kann auch unabhängig von dem jeweils anderen Schwenkarm zum Schwenken der Schleif- oder Abziehscheibe unabhängig von der jeweils anderen Scheibe um die gemeinsame Drehachse des Drehlagers drehbar sein. Die beiden Scheiben können somit gemeinsam oder unabhängig voneinander um die Drehachse gedreht und daher um die mit der Drehachse zusammenfallende Schwenkachse geschwenkt werden, so dass der Abzieh- bzw. der Schleifwinkel durch Verdrehen der Schwenkarme verstellbar ist.

Die Schleifscheibe und die Abziehscheibe können einen gemeinsamen Schwenkantrieb aufweisen. Dadurch kann das Schleifwerkzeug kompakt ausgebildet werden, womit das Prinzip des eine mit der Schwenkachse zusammenfallende Drehachse aufweisenden Drehlagers in besonders vorteilhafter Weise ausgenutzt wird.

Vorzugsweise ist die Länge jedes Schwenkarms veränderbar, so dass der Abstand zwischen der am jeweiligen Schwenkarm angeordneten Scheibe zum Drehlager verstellbar ist. Dadurch kann der Abstand zwischen dem Schleifpunkt und dem Drehlager verstellt und beispielsweise an unterschiedlich große Messer angepasst werden.

Bevorzugt ist das Schleifwerkzeug, insbesondere linear, verfahrbar, so dass das Schleifwerkzeug und das zu schleifende Rotationsmesser während des Schleifvorgangs in Kontakt miteinander gehalten werden können, insbesondere falls das Rotationsmesser einen variierenden Radius aufweist, wie dies bei einem Sichelmesser der Fall ist.

Die Schleifvorrichtung kann eine Anzeige umfassen, die den momentanen Schleifwinkel und/oder Abziehwinkel oder andere den Schleifvorgang betreffende Parameter anzeigt.

Gemäß einer Weiterbildung umfasst die Vorrichtung eine Messeinrichtung zur Ermittlung des Verlaufs der Schneide, und eine Steuerung, die dazu ausgebildet ist, den ermittelten Schneidenverlauf zur Steuerung der Relativbewegung zwischen dem Schleifwerkzeug und dem Rotationsmesser zu verwenden.

Bei der so weitergebildeten Vorrichtung ist es somit möglich, den Schneidenverlauf des zu schleifenden Rotationsmessers vor dem Schleifvorgang zu ermitteln. Kopierplatten werden somit nicht mehr benötigt. Außerdem können auf diese Weise messerspezifische Abnutzungen und/oder Abweichungen des Schneidenverlaufs gegenüber dem "idealen" Verlauf eines noch unbenutzten Messers berücksichtigt werden, so dass ein optimales Schleifergebnis erreicht werden kann.

Unter "Schneidenverlauf" wird im Rahmen dieser Offenbarung auch der Verlauf des Schneidenwinkels verstanden, der längs des Messerumfangs variieren kann, während die Schneidkante zum Beispiel auf einem Kreis liegt.

Bevorzugt ist die Messeinrichtung dazu ausgebildet, als Schneidenverlauf eine Schneidkante oder ein anderes, dem Schneidenverlauf entsprechendes und/oder ein Ableiten des Schneidenverlaufs gestattendes Merkmal des Rotationsmessers zu erfassen. Die Schneidkante kann besonders einfach erfasst werden, zum Beispiel durch eine Lichtschranke, was die Ermittlung des Schneidenverlaufs begünstigt. Bei dem Merkmal, welches ein Ableiten des Schneidenverlaufs gestattet, kann es sich beispielsweise um mehrere Erhebungen oder um eine Kante an dem Übergang von einem Schneidenbereich zu einem weiter innen liegenden Bereich des Messers handeln, die auf einer Seite des Messerkörpers dem Verlauf der Schneide folgend angeordnet sind bzw. ist, so dass der Schneidenverlauf aus dem erfassten Verlauf der Erhebungen bzw. der Kante abgeleitet werden kann. Ein Messer mit derartigen Erhebungen ist zum Beispiel aus der DE 10 2009 006 912 A1 bekannt.

Die Messeinrichtung kann berührungslos arbeiten. Dadurch kann die Messeinrichtung vor Verschmutzung und Verschleiß geschützt werden.

Nach einer bevorzugten Ausgestaltung der Erfindung weist die Messeinrichtung einen Erfassungsbereich auf, mit welchem ausschließlich ein Abschnitt der Schneide detektierbar ist. Dadurch kann die Position des Abschnitts relativ genau bestimmt und der Schneidenverlauf mit hinreichender Genauigkeit aus einer Vielzahl von erfassten Positionen von mehreren entlang des Schneidenverlaufs liegenden Schneidenabschnitte ermittelt werden. Auch eine punktuelle Erfassung der Schneide kann vorgesehen sein, so dass der Schneidenverlauf aus einer Vielzahl von derart erfassten Punkten ermittelt werden kann, zum Beispiel durch Interpolieren.

Bevorzugt sind die Messeinrichtung und das Rotationsmesser derart relativ zueinander bewegbar, dass die Schneide durch den Erfassungsbereich der Messeinrichtung bewegbar und dabei kontinuierlich oder abschnittsweise detektierbar ist. Dadurch kann der Schneidenverlauf bei punktueller oder abschnittsweiser Erfassung der Schneide einfach und schnell detektiert werden.

Nach einer bevorzugten Weiterbildung der Erfindung ist die Messeinrichtung verfahrbar. Auf diese Weise ist es möglich, durch Verfahren der Messeinrichtung einen den Verfahrweg kreuzenden Abschnitt der Schneide zu detektieren, sobald dieser in den Erfassungsbereich der Messeinrichtung gelangt.

Bevorzugt weist die Messeinrichtung eine Lichtschranke, insbesondere eine Gabellichtschranke, auf. Dadurch kann eine zuverlässige Messeinrichtung gleichzeitig kostengünstig realisiert werden.

Besonders bevorzugt ist die Messeinrichtung dazu ausgebildet, die Position, bei der die Lichtschranke durch einen Abschnitt der Schneide unterbrochen oder freigegeben wird, als Messwert für die Position dieses Abschnitts zu ermitteln. Dadurch kann zum Beispiel die Position eines mittels der Lichtschranke detektierten Abschnitts bezogen auf einen Verfahrweg der Lichtschranke erfasst werden. Dies ist vorteilhaft, da der Verfahrweg der Lichtschranke besonders einfach gemessen werden kann, zum Beispiel mittels eines Encoders, der mit einem Antrieb zum Verfahren der Lichtschranke gekoppelt ist.

In besonders vorteilhafter Weise ist die Messeinrichtung dazu ausgebildet, die Menge aller so erfassten Positionen zumindest als Basis für den Schneidenverlauf zu verwenden. Die Positionen können dabei direkt als Schneidenverlauf angenommen werden oder es können weitere Positionen zum Beispiel durch Interpolation berechnet werden, so dass der Schneidenverlauf mit hoher Genauigkeit ermittelt werden kann.

Bevorzugt ist das Rotationsmesser bewegbar und die Messeinrichtung ist dazu ausgebildet, die Stellung des Rotationsmessers zu ermitteln. Dadurch ist es möglich, die Positionen jeweils in Abhängigkeit der Stellung des Rotationsmessers zu erfassen und den Schneidenverlauf zum Beispiel in Form von Wertepaaren zu ermitteln, wobei ein Wertepaar eine erfasste Position eines Abschnitts der Schneide, also eines Teils des Schneidenverlaufs, und die zugehörige Stellung des Rotationsmessers umfasst.

Besonders einfach lässt sich der Schneidenverlauf ermitteln, wenn das Rotationsmesser um eine für den Schneidebetrieb vorgesehene Drehachse drehbar und die Messeinrichtung derart linear verfahrbar ist, dass für eine Mehrzahl von Drehstellungen des Rotationsmessers jeweils mittels der Messeinrichtung die Position eines Abschnitts der Schneide des Rotationsmessers ermittelbar ist.

Zur zumindest temporären Speicherung wenigstens eines ermittelten Schneidenverlaufs kann ein Speicher vorgesehen sein. In dem Speicher können alle benötigten, zum Beispiel zuvor eingelernten oder eingegebenen Schneidenverläufe vorgehalten werden, die zu schleifenden Messern entsprechen.

Die Erfindung betrifft auch gemäß Anspruch 15 ein Verfahren zum Schleifen von Rotationsmessern, insbesondere Sichel- oder Kreismessern, insbesondere für Maschinen zum Aufschneiden von Lebensmittelprodukten, mit einer erfindungsgemäßen Vorrichtung. Dabei wird der Verlauf der Schneide des Rotationsmessers ermittelt und das Rotationsmesser anschließend geschliffen, wobei eine Relativbewegung zwischen dem Rotationsmesser und einem Schleifwerkzeug anhand des ermittelten Schneidenverlaufs gesteuert wird.

Die Erfindung wird im Folgenden beispielhaft unter Bezugnahme auf die Zeichnungen beschrieben. Es zeigen, teilweise in schematischer Darstellung:
- Fig. 1: eine seitliche Ansicht einer erfindungsgemäßen Vorrichtung zum Schleifen von Rotationsmessern,
- Fig. 2: eine seitliche Ansicht auf das Rotationsmesser und eine Messeinrichtung der Vorrichtung von Fig. 1,
- Fig. 3: eine Draufsicht auf das Rotationsmesser und die Messeinrichtung von Fig. 2,
- Fig. 4: eine weitere seitliche Ansicht der Vorrichtung von Fig. 1,
- Fig. 4A: eine perspektivische Ansicht eines Schleifwerkzeugs und einer Schwenkeinrichtung zum Beispiel für ein Schleifwerkzeug der Vorrichtung von Fig. 1 und 4,
- Fig. 4B: eine zusätzliche perspektivische Ansicht des Schleifwerkzeugs und der Schwenkeinrichtung von Fig. 4A, und
- Fig. 5: eine seitliche Ansicht des Rotationsmessers, des Schleifwerkzeugs und der Schwenkeinrichtung der Vorrichtung von Fig. 1 und 4.

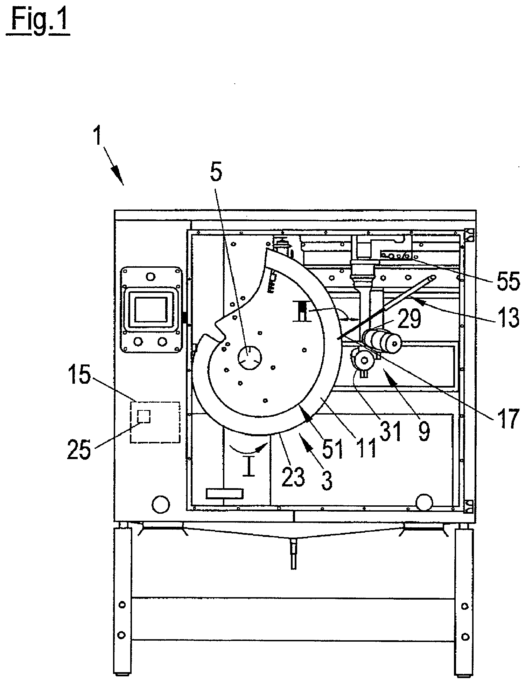

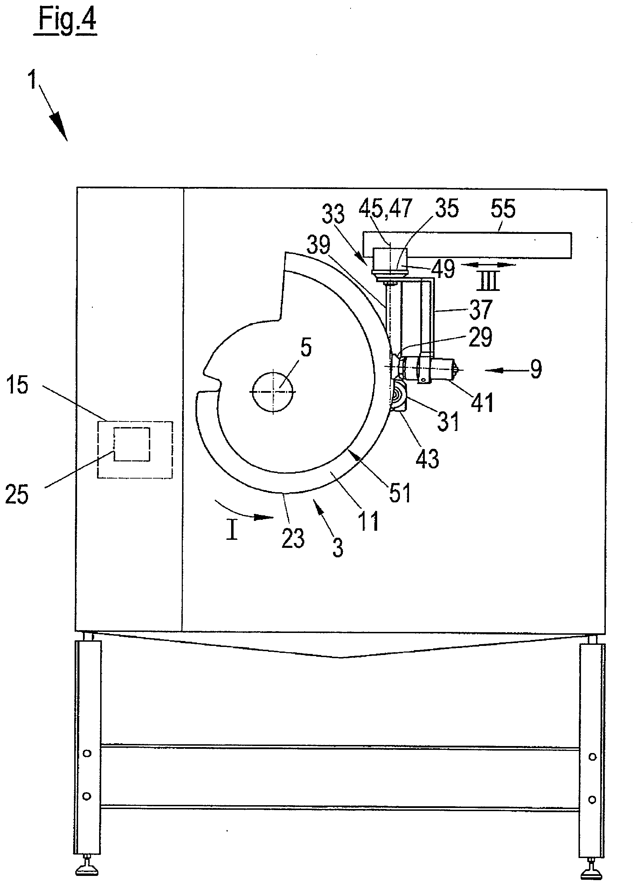

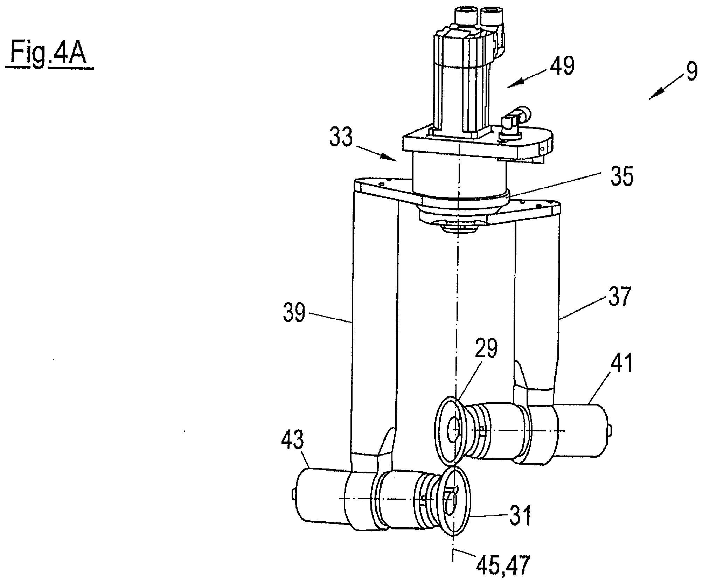

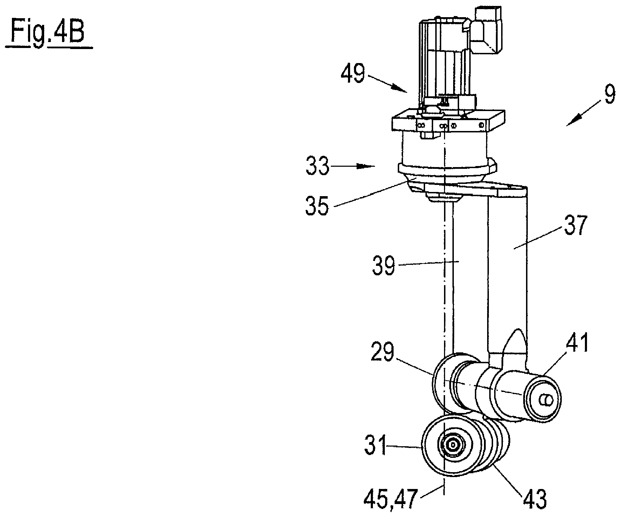

Die dargestellte Schleifvorrichtung 1 ist zum Schleifen von Rotationsmessern 3 vorgesehen. Derartige Rotationsmesser 3 kommen beispielsweise in Hochgeschwindigkeitsschneidemaschinen zum Aufschneiden von Lebensmittelprodukten, die auch als Slicer bezeichnet werden, zum Einsatz. Um ein zu schleifendes Rotationsmesser 3 an der Schleifvorrichtung 1 anzubringen, ist eine Aufnahme 5 vorgesehen, auf die eine Aufnahmeöffnung 7 des Rotationsmessers 3 aufgesetzt und an der das Rotationsmesser 3 befestigt wird (vgl. Fig. 1 und 4).

Die Schleifvorrichtung 1 weist ein Schleifwerkzeug 9 auf. Das Rotationsmesser 3 und das Schleifwerkzeug 9 sind relativ zueinander bewegbar, sodass eine am Umfang des Rotationsmessers 3 verlaufende Schneide 11 vom Schleifwerkzeug 9 geschliffen werden kann. Vor dem Schleifen erfolgt bei der Vorrichtung 1 eine automatische Ermittlung des Verlaufs der Schneide 11 durch eine Messeinrichtung 13, die mit einer Steuerung 15 gekoppelt ist, so dass der ermittelte Schneidenverlauf der Steuerung 15 bereitgestellt werden kann. Die Steuerung 15 ist wiederum mit dem Schleifwerkzeug 9 und einem Antrieb (nicht gezeigt) für die Aufnahme 5 gekoppelt. Durch den Antrieb können die Aufnahme 5 und das daran befestigte Rotationsmesser 3 in eine Drehrichtung I gedreht werden und die Steuerung 15 ist dazu ausgebildet, den ermittelten Schneidenverlauf zur Steuerung der Relativbewegung zwischen dem Schleifwerkzeug 9 und dem Rotationsmesser 3 einzusetzen.

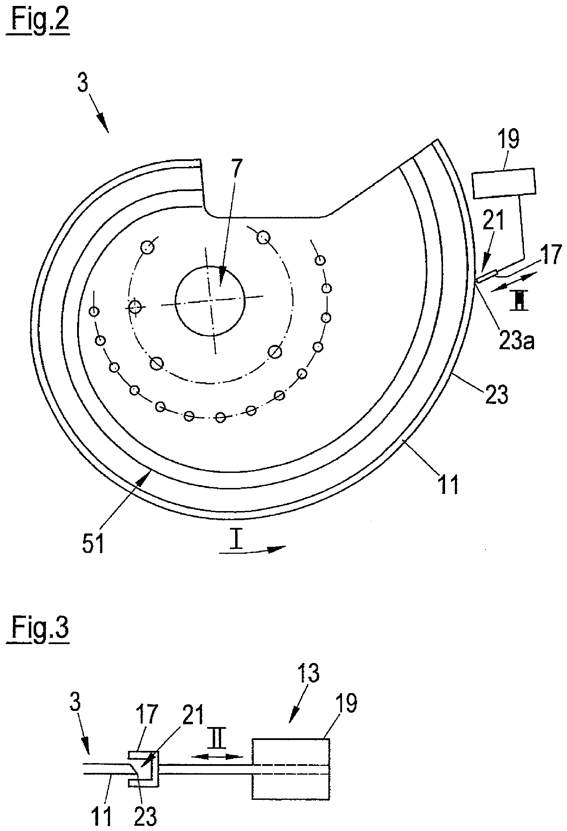

Zur Erfassung des Verlaufs der Schneide 11 weist die Messeinrichtung 13 eine Gabellichtschranke 17 auf, die mit einem Linearmotor 19 (vgl. Fig. 2 und 3) gekoppelt und so angeordnet ist, dass sich die Gabellichtschranke 17 radial außen vor der Schneide 11 befindet, vgl. Fig. 2. Durch den Linearmotor 19 kann die Gabellichtschranke 17 entlang eines Verfahrwegs II (vgl. den Doppelpfeil in Fig. 1 bis 3) bewegt werden, so dass die Gabellichtschranke 17 auf das Rotationsmesser 3 zu oder von diesem wegbewegt wird.

Die Gabellichtschranke 17 weist einen Erfassungsbereich 21 auf, innerhalb dem ein Lichtweg zwischen einem Sender und einem Empfänger (beide nicht gezeigt) der Gabellichtschranke 17 verläuft. Wird die Gabellichtschranke 17 von radial außen auf das Rotationsmesser 3 zu bewegt (vgl. Fig. 2 und 3), so wird der Lichtweg von dem den Verfahrweg II kreuzenden Abschnitt 23a einer radial außen liegenden Schneidkante 23 unterbrochen, sobald der Abschnitt 23a in den Erfassungsbereich 21 gelangt. Bei entgegengesetzter Bewegung der Gabellichtschranke 17 wird der Lichtweg wieder freigegeben, sobald der Abschnitt 23a den Erfassungsbereich wieder verlässt.

Bei der Vorrichtung 1 wird das Rotationsmesser 3 in Drehrichtung I gedreht, so dass für eine Vielzahl von Drehstellungen des Rotationsmessers 3 der jeweilige den Verfahrweg II der Gabellichtschranke 17 kreuzende Abschnitt 23a der Schneidkante 23 detektiert werden kann. Aus der Menge der so erfassten Abschnitte 23a erfolgt sodann die Ermittlung des Verlaufs der Schneide 11. Dabei wird als Messwert für die Position eines detektierten Abschnitts 23a die jeweilige Lage der Lichtschranke 17, bezogen auf den Verfahrweg II, zum Beispiel mittels eines mit dem Linearmotor 19 gekoppelten Encoders (nicht gezeigt), von der Messeinrichtung 13 ermittelt. Außerdem ist die Messeinrichtung 13 dazu ausgebildet, die jeweilige Stellung des Rotationsmessers 3, bezogen auf die Drehrichtung I, zu ermitteln, bei der der jeweilige Abschnitt 23a detektiert wird. Dazu ist die Messeinrichtung 13 mit einem nicht gezeigten Stellungssensor gekoppelt, der dazu ausgebildet und angeordnet ist, die Stellung des Rotationsmessers 3, bspw. als Drehwinkel bezogen auf einen Nullpunkt, zu erfassen.

Die Messeinrichtung 13 ermittelt bei der beschriebenen Ausführungsform daher eine Vielzahl von Wertepaaren. Dabei umfasst ein Wertepaar die bezogen auf den Verfahrweg II ermittelte Position des jeweiligen den Verfahrweg II kreuzenden Abschnitts 23a der Schneidekante 23 sowie die dazugehörige Drehstellung des Rotationsmessers 3. Die so ermittelten Wertepaare können direkt als Schneidenverlauf angenommen werden. Alternativ kann für jedes Wertepaar der Messwert, der die Position eines Abschnitts 23a bezogen auf den Verfahrweg II angibt, umgerechnet werden in einen Abstandswert, der den Abstand zwischen dem jeweiligen Abschnitt 23a und dem Zentrum der Aufnahme 5 bzw. der Aufnahmeöffnung 7 angibt. Damit kann der Verlauf der Schneidkante 23 in Polarkoordinaten mit dem Zentrum der Aufnahme 5 bzw. der Aufnahmeöffnung 7 als Ursprung ermittelt werden. Je nach Anzahl der auf diese Weise ermittelten Wertepaare können durch Interpolation weitere Wertepaare berechnet werden.

Alternativ könnte die Messeinrichtung zum Beispiel derart ausgebildet sein, dass eine entsprechend der Schneide 11 verlaufende Kante 51 des Rotationsmessers 3 (vgl. Fig. 1 und 2) detektiert wird. Auch ist prinzipiell denkbar, den Schneidenverlauf mittels einer Kamera und durch Bildauswertung zu bestimmen. Eine Relativbewegung zwischen Messer 3 und Messeinrichtung 13 ist also für die Bestimmung des Schneidenverlaufs nicht zwingend.

Der so ermittelte Schneidenverlauf wird von der Messeinrichtung 13 an die Steuerung 15 übermittelt und dort in einem Speicher 25 zumindest temporär gespeichert. Außerdem wird die Gabellichtschranke 21 nach der Ermittlung des Schneidenverlaufs vom Rotationsmesser 3 weggefahren.

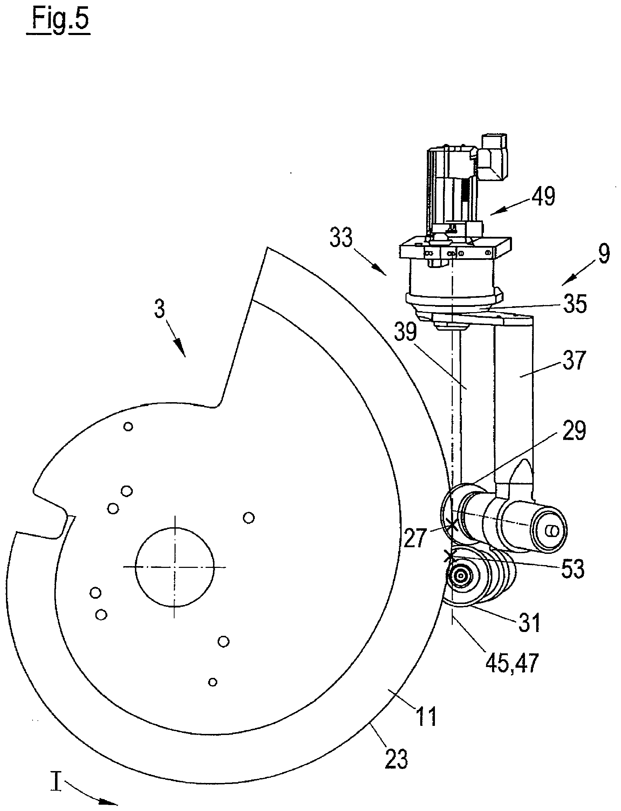

Zum Schleifen des Rotationsmessers 3 erfolgt die Bearbeitung der Schneide 11 in an sich bekannter Weise durch eine Schleif- und Abziehscheibe 29, 31 des Schleifwerkzeugs 9. Dabei wird die Schneide 11 von der Schleifscheibe 29 in einem Schleifpunkt 27 und von der Abziehscheibe 31 in einem Abziehpunkt 53 berührt (vgl. Fig. 5). Das Schleifwerkzeug 9 kann dabei derart relativ zum Rotationsmesser 3 positionierbar sein, dass, insbesondere während des gesamten Schleifvorgangs, die Schwenkachse 45 tangential zu der durch den jeweiligen Schleifpunkt 27 verlaufenden Schneidkante 23 ausgerichtet ist. Das Rotationsmesser 3 wird in Drehrichtung I gedreht und somit am Schleifwerkzeug 9 vorbeibewegt. Die Steuerung 15 ist - wie erwähnt - dazu ausgebildet, die Relativbewegung zwischen dem Rotationsmessers 3 und dem Schleifwerkzeugs 9 so zu steuern, dass die Schneide 11 entsprechend dem ermittelten Schneidenverlauf vom Schleifwerkzeug 9 "abgefahren" wird. Dabei kann das Schleifwerkzeug 9 mittels eines Linearmotors 55 längs eines Verfahrweges III (vgl. Fig. 4) verfahren werden, um den Schleifpunkt 27 und den Abziehpunkt 53 in Kontakt mit der Schneide 11 zu halten, während das Rotationsmesser 3 am Schleifwerkzeug 9 vorbeibewegt wird. Das Schleifwerkzeug 9 wird somit nachgefahren, um den sich verändernden Radius des Rotationsmessers 3 auszugleichen.

Das in Fig. 4A und 4B detaillierter dargestellte Schleifwerkzeug 9 ist über eine Schwenkeinrichtung 33 an der Vorrichtung 1 befestigt. Die Schwenkeinrichtung 33 weist ein Drehlager 35 auf, an dem ein erster und ein zweiter Schwenkarm 37, 39 drehbar angeordnet sind. Am ersten Schwenkarm 37 ist ein Antrieb 41 für die Schleifscheibe 29 und am zweiten Schwenkarm 39 ist ein Antrieb 43 für die Abziehscheibe 31 angeordnet. Durch die Schwenkeinrichtung 33 sind die Schleif- und Abziehscheibe 29, 31 um eine durch den Schleifpunk 27 und den Abziehpunkt 53 verlaufende Schwenkachse 45 schwenkbar, die mit der Drehachse 47 des Drehlagers 35 zusammenfällt (vgl. Fig. 5), was vorteilhaft für das Schleifen von Messern mit variierendem Schneidenwinkel ist, da somit auch während des Schleifvorgangs auf einfache Weise ein Verschwenken bzw. Verdrehen der beiden Scheiben 29, 31 erfolgen kann, ohne insbesondere die Lage der Schleif- und Abziehpunkte 27, 53 auf der jeweiligen Scheibe 29, 31 zu verändern.

Wie insbesondere in Fig. 5 gesehen werden kann, bilden die beiden Scheiben 29, 31 eine V-förmige Aufnahme für das Schneidmesser 3. Die beiden Scheiben 29, 31 sind also auf unterschiedlichen Seiten des Messers 3 angeordnet, d.h. die eine Scheibe auf der Vorderseite und die andere Scheibe auf der Rückseite des Messers 3. Die beiden Scheiben 29, 31 sind dabei, bezogen auf die Schwenkachse 45, versetzt zueinander angeordnet. Wie dargestellt, sind die beiden Scheiben 29, 31 bezogen auf die Schwenkachse 45 direkt übereinander angeordnet, so dass sie unmittelbar einander gegenüberstehen, d.h. unter Ausbildung der V-förmigen Aufnahme in unmittelbarer Nähe zueinander angeordnet sind. Die beiden Scheiben 29, 31 können sich somit berühren oder nur einen geringen Abstand voneinander aufweisen. Durch die versetzte Anordnung der Scheiben 29, 31 liegen der Schleifpunkt 27 und der Abziehpunkt 53 ebenfalls längs der Schwenkachse 45 versetzt zueinander.

Zum gemeinsamen Schwenken beider Scheiben 29, 31 um die Schwenk- bzw. Drehachse 45, 47 ist das Drehlager 35 mit einem, insbesondere von der Steuerung 15 steuerbaren, Schwenkantrieb 49 gekoppelt, so dass beide Scheiben 29, 31 während des Schleifens durch den Schwenkantrieb 49 geschwenkt und somit der Schleifwinkel und der Abziehwinkel an den Schneidenwinkel des Messers 3 angepasst werden kann. Diese Art des Verschwenkens ist aufgrund der mit der Schwenkachse 45 zusammenfallenden Drehachse 47 des Drehlagers 35 äußerst präzise und zudem besonders störungsunanfällig. Eine exakte Positionierung des Schleifpunkts 27 kann so auch bei einer Änderung des Schleifwinkels sichergestellt werden.

Es kann auch vorgesehen sein, dass die Scheiben 29, 31, insbesondere während des Schleifens, unabhängig voneinander um die Schwenkachse 45 geschwenkt werden können, so dass der Schleifwinkel und der Abziehwinkel unabhängig voneinander einstellbar sind. Dies wird insbesondere dadurch erreicht, dass die beiden Schwenkarme 37, 39 unabhängig voneinander um die Drehachse 47 des Drehlagers 35 drehbar sind.

Die Länge jedes Schwenkarms 37, 39 kann variierbar sein, so dass der Abstand zwischen der am jeweiligen Schwenkarm angeordneten Scheibe 29, 31 zum Drehlager 35 verstellbar ist. Der Abstand zwischen dem Schleifpunkt 27 und dem Drehlager 35 kann somit geändert und an unterschiedlich große Messer angepasst werden.

### Bezugszeichenliste

- 1: Schleifvorrichtung
- 3: Rotationsmesser
- 5: Aufnahme
- 7: Aufnahmeöffnung
- 9: Schleifwerkzeug
- 11: Schneide
- 13: Messeinrichtung
- 15: Steuerung
- 17: Gabellichtschranke
- 19: Linearmotor
- 21: Erfassungsbereich der Gabellichtschranke
- 23: Schneidkante
- 23a: Abschnitt der Schneidkante
- 25: Speicher
- 27: Schleifpunkt
- 29: Schleifscheibe
- 31: Abziehscheibe
- 33: Schwenkeinrichtung
- 35: Drehlager
- 37,39: Schwenkarm
- 41: Antrieb der Schleifscheibe
- 43: Antrieb der Abziehscheibe
- 45: Schwenkachse
- 47: Drehachse des Drehlagers
- 49: Schwenkantrieb
- 51: Kante
- 53: Abziehpunkt
- 55: Linearmotor
- I: Drehrichtung des Messers und der Aufnahme
- II: Verfahrweg der Lichtschranke
- III: Verfahrweg des Schleifwerkzeugs

## Patentansprüche

1. Vorrichtung (1) zum Schleifen von Rotationsmessern (3), insbesondere Sichel- oder Kreismessern, insbesondere für Maschinen zum Aufschneiden von Lebensmittelprodukten, mit:
wenigstens einer Aufnahme (5) für ein Rotationsmesser (3), an der das Rotationsmesser (3) anbringbar ist,
zumindest einem Schleifwerkzeug (9),
wobei das Schleifwerkzeug (9) und das in der Aufnahme (5) angebrachte Rotationsmesser (3) derart relativ zueinander bewegbar sind, dass eine am Umfang des Rotationsmessers (3) verlaufende Schneide (11) vom Schleifwerkzeug (9) geschliffen werden kann,
wobei eine Schwenkeinrichtung (33) für das Schleifwerkzeug (9) vorgesehen ist,
wobei die Schwenkeinrichtung (33) derart ausgebildet ist, dass das Schleifwerkzeug (9) um eine Schwenkachse (45) schwenkbar ist, die durch einen Schleifpunkt (27) verläuft, an welchem sich die Schneide (11) und das Schleifwerkzeug (9) während des Schleifvorgangs berühren, und
wobei die Schwenkeinrichtung (33) wenigstens ein Drehlager (35) aufweist und die Drehachse (47) des Drehlagers (35) mit der Schwenkachse (45) des Schleifwerkzeugs (9) zusammenfällt,
**dadurch gekennzeichnet, dass**
dass das Schleifwerkzeug (9) eine Schleifscheibe (29) aufweist, die die Schneide (11) am Schleifpunkt (27) berührt und um die Schwenkachse (45) verschwenkbar ist, wobei das Schleifwerkzeug (9) eine Abziehscheibe (31) aufweist, die zusammen mit der Schleifscheibe (29) zumindest annähernd eine V-förmige Aufnahme für das Rotationsmesser (3) bildet und die Schneide (11) an einem Abziehpunkt (53) berührt, wobei die Abziehscheibe (31) gemeinsam mit der Schleifscheibe (29) und/oder unabhängig von der Schleifscheibe (31) um die Schwenkachse (45) verschwenkbar ist, und
dass die Schleifscheibe (29) und die Abziehscheibe (31) jeweils an einem Schwenkarm (37, 39) angebracht sind, wobei beide Schwenkarme (37, 39) am Drehlager (35) angebracht und zum gemeinsamen Verschwenken von Schleifscheibe (29) und Abziehscheibe (31) um die gemeinsame Drehachse (47) des Drehlagers (35) drehbar sind und/oder wobei jeder Schwenkarm (37, 39) unabhängig von dem jeweils anderen Schwenkarm (37, 39) zum Schwenken von Schleifscheibe (29) oder Abziehscheibe (31) unabhängig von der jeweils anderen Scheibe (29, 31) um die gemeinsame Drehachse (47) des Drehlagers (35) drehbar ist.

2. Vorrichtung nach Anspruch 1,
**dadurch gekennzeichnet, dass**
der Abziehpunkt (53) durch die Schwenkachse (45) verläuft.

3. Vorrichtung nach Anspruch 1 oder 2,
**dadurch gekennzeichnet, dass**
die Schleifscheibe (29) und die Abziehscheibe (31) längs der Schwenkachse (45) versetzt zueinander angeordnet sind, insbesondere derart, dass, bezogen auf die Schwenkachse (45), die Schleifscheibe (29) und die Abziehscheibe (31) unmittelbar einander gegenüberstehen.

4. Vorrichtung nach einem der vorhergehenden Ansprüche,
**dadurch gekennzeichnet, dass**
das Rotationsmesser (3) und das Schleifwerkzeug (9) derart relativ zueinander positionierbar sind, dass die Schwenkachse (45) zumindest annähernd tangential zur am jeweiligen Schleifpunkt (27) vorhandenen Schneidkante (23) ausgerichtet ist.

5. Vorrichtung nach einem der vorhergehenden Ansprüche,
**dadurch gekennzeichnet, dass**
die Schleifscheibe (29) und die Abziehscheibe (29) einen gemeinsamen Schwenkantrieb (49) aufweisen.

6. Vorrichtung nach einem der vorhergehenden Ansprüche,
**dadurch gekennzeichnet, dass**
die Vorrichtung eine Messeinrichtung (13) zur Ermittlung des Verlaufs der Schneide (11) und eine Steuerung (15) aufweist, die dazu ausgebildet ist, den ermittelten Schneidenverlauf zur Steuerung der Relativbewegung zwischen dem Schleifwerkzeug (9) und dem Rotationsmesser (3) zu verwenden.

7. Vorrichtung nach Anspruch 6,
**dadurch gekennzeichnet, dass**
die Messeinrichtung (13) dazu ausgebildet ist, als Schneidenverlauf eine Schneidkante (23) oder ein anderes, dem Schneidenverlauf entsprechendes und/oder ein Ableiten des Schneidenverlaufs gestattendes Merkmal des Rotationsmessers (3) zu erfassen.

8. Vorrichtung nach Anspruch 6 oder 7,
**dadurch gekennzeichnet, dass**
die Messeinrichtung (13) berührungslos arbeitet.

9. Vorrichtung nach einem der Ansprüche 6 bis 8,
**dadurch gekennzeichnet, dass**
die Messeinrichtung (13) einen Erfassungsbereich (21) aufweist, mit welchem ausschließlich ein Abschnitt (23a) der Schneide (11) detektierbar ist, und/oder dass die Messeinrichtung (13) und das Rotationsmesser (3) derart relativ zueinander bewegbar sind, dass die Schneide (11) durch den Erfassungsbereich (21) der Messeinrichtung (13) bewegbar und dabei kontinuierlich oder abschnittsweise detektierbar ist.

10. Vorrichtung nach einem der Ansprüche 6 bis 9,
**dadurch gekennzeichnet, dass**
die Messeinrichtung (13) verfahrbar ist.

11. Vorrichtung nach einem der Ansprüche 6 bis 10,
**dadurch gekennzeichnet, dass**
die Messeinrichtung (13) eine Lichtschranke, insbesondere eine Gabellichtschranke (17), aufweist, wobei insbesondere die Messeinrichtung (13) dazu ausgebildet ist, die Position, bei der die Lichtschranke (17) durch einen Abschnitt (23a) der Schneide (11) unterbrochen oder freigegeben wird, als Messwert für die Position dieses Abschnitts (23a) zu ermitteln, wobei insbesondere die Messeinrichtung (13) dazu ausgebildet ist, die Menge aller so erfassten Positionen zumindest als Basis für den Schneidenverlauf zu verwenden.

12. Vorrichtung nach einem der Ansprüche 6 bis 11,
**dadurch gekennzeichnet, dass**
das Rotationsmesser (3) bewegbar und die Messeinrichtung (13) dazu ausgebildet ist, die Stellung des Rotationsmessers (3) zu ermitteln.

13. Vorrichtung nach einem der Ansprüche 6 bis 12,
**dadurch gekennzeichnet, dass**
das Rotationsmesser (3) um eine für den Schneidebetrieb vorgesehene Drehachse drehbar und die Messeinrichtung (13) derart linear verfahrbar ist, dass für eine Mehrzahl von Drehstellungen des Rotationsmessers jeweils mittels der Messeinrichtung (13) die Position eines Abschnitts (25a) der Schneide (11) des Rotationsmessers (3) ermittelbar ist.

14. Vorrichtung nach einem der Ansprüche 6 bis 13,
**dadurch gekennzeichnet, dass**
ein Speicher (25) zur zumindest temporären Speicherung wenigstens eines ermittelten Schneidenverlaufs vorgesehen ist.

15. Verfahren zum Schleifen von Rotationsmessern (3), insbesondere Sichel- oder Kreismessern, insbesondere für Maschinen zum Aufschneiden von Lebensmittelprodukten, mit einer Vorrichtung (1) nach einem der vorhergehenden Ansprüche, bei dem
der Verlauf der Schneide (11) des Rotationsmessers (3) ermittelt und das Rotationsmesser (3) anschließend während einer Relativbewegung zwischen dem Rotationsmesser (3) und einem Schleifwerkzeug (9) geschliffen wird,
wobei die Relativbewegung zwischen dem Rotationsmesser (3) und dem Schleifwerkzeug (9) anhand des ermittelten Schneidenverlaufs gesteuert wird.

## Claims

1. An apparatus (1) for grinding rotary blades (3), in particular scythe-like blades or circular blades, in particular for machines for slicing food products, comprising:
at least one mount (5) for a rotary blade (3) to which the rotary blade (3) can be attached; and
at least one grinding tool (9),
wherein the grinding tool (9) and the rotary blade (3) attached in the mount (5) are movable relative to one another such that a blade edge (11) extending at the periphery of the rotary blade (3) can be ground by the grinding tool (9),
wherein a pivot device (33) is provided for the grinding tool (9),
wherein the pivot device (33) is configured such that the grinding tool (9) is pivotable about a pivot axis (45) which extends through a grinding point (27) at which the blade edge (11) and the grinding tool (9) contact one another during the grinding process, and
wherein the pivot device (33) has at least one pivot bearing (35) and the axis of rotation (47) of the pivot bearing (35) coincides with the pivot axis (45) of the grinding tool (9),
**characterized in that**
the grinding tool (9) has a grinding wheel (29) which contacts the blade edge (11) at the grinding point (27) and is pivotable about the pivot axis (45), with the grinding tool (9) having a dressing wheel (31) which forms at least approximately a V-shaped receiver for the rotary blade (3) together with the grinding wheel (29) and contacts the blade edge (11) at a dressing point (53), with the dressing wheel (31) being pivotable about the pivot axis (45) together with the grinding wheel (29) and/or independently of the grinding wheel (31); and
**in that** the grinding wheel (29) and the dressing wheel (31) are each attached to a pivot arm (37, 39), with both pivot arms (37, 39) being attached to the pivot bearing (35) and being rotatable about the common axis of rotation (47) of the pivot bearing (35) for the common pivoting of the grinding wheel (29) and the dressing wheel (31), and/or with each pivot arm (37, 39) being rotatable about the common axis of rotation (47) of the pivot bearing (35) independently of the respective other pivot arm (37, 39) for pivoting the grinding wheel (29) or the dressing wheel (31) independently of the respective other wheel (29, 31).

2. An apparatus according to claim 1,
**characterized in that**
the dressing point (53) extends through the pivot axis (45).

3. An apparatus according to claim 1 or 2,
**characterized in that**
the grinding wheel (29) and the dressing wheel (31) are arranged offset from one another along the pivot axis (45), in particular such that the grinding wheel (29) and the dressing wheel (31) are directly opposite one another with respect to the pivot axis (45).

4. An apparatus according to any one of the preceding claims,
**characterized in that**
the rotary blade (3) and the grinding tool (9) can be positioned relative to one another such that the pivot axis (45) is aligned at least approximately tangentially to the cutting edge (23) present at the respective grinding point (27).

5. An apparatus according to any one of the preceding claims,
**characterized in that**
the grinding wheel (29) and the dressing wheel (29) have a common pivot drive (49).

6. An apparatus according to any one of the preceding claims,
**characterized in that**
the apparatus has a measuring device (13) for determining the course of the blade edge (11); and a control (15) which is configured to use the determined blade edge course for controlling the relative movement between the grinding tool (9) and the rotary blade (3).

7. An apparatus according to claim 6,
**characterized in that**
the measuring device (13) is configured to detect as a blade edge course a cutting edge (23) or another feature of the rotary blade (3) corresponding to the blade edge course and/or allowing a deduction of the blade edge course.

8. An apparatus according to claim 6 or 7,
**characterized in that**
the measuring device (13) works in a contactless manner.

9. An apparatus according to any one of the claims 6 to 8,
**characterized in that**
the measuring device (13) has a detection zone (21) with which only a section (23a) of the blade edge (11) is detectable; and/or **in that** the measuring device (13) and the rotary blade (3) are movable relative to one another such that the blade edge (11) is movable through the detection zone (21) of the measuring device (13) and in so doing is detectable continuously or section-wise.

10. An apparatus according to any one of the claims 6 to 9,
**characterized in that**
the measuring device (13) is travelable.

11. An apparatus according to any one of the claims 6 to 10,
**characterized in that**
the measuring device (13) has a light barrier (17), in particular a forked light barrier (17), with the measuring device (13) in particular being configured to determine the position at which the light barrier (17) is interrupted or released by a section (23a) of the blade edge (11) as a measured value for the position of this section (23a), with the measuring device (13) in particular being configured to use the set of all positions thus detected at least as the basis for the blade edge course.

12. An apparatus according to any one of the claims 6 to 11,
**characterized in that**
the rotary blade (3) is movable and the measuring device (13) is configured to determine the position of the rotary blade (3).

13. An apparatus according to any one of the claims 6 to 12,
**characterized in that**
the rotary blade (3) is rotatable about an axis of rotation provided for the cutting operation and the measuring device (13) is linearly travelable such that the position of a section (25a) of the blade edge (11) of the rotary blade (3) can be determined for a plurality of rotational positions of the rotary blade by means of the measuring device (13) in each case.

14. An apparatus according to any one of the claims 6 to 13,
**characterized in that**
a memory (25) is provided for the at least temporary storage of at least one determined blade edge course.

15. A method for grinding rotary blades (3), in particular scythe-like blades or circular blades, in particular for machines for slicing food products, using an apparatus (1) according to any one of the preceding claims, in which the course of the blade edge (11) of the rotary blade (3) is determined and the rotary blade (3) is subsequently ground during a relative movement between the rotary blade (3) and a grinding tool (9),
wherein the relative movement between the rotary blade (3) and the grinding tool (9) is controlled by means of the determined blade edge course.

## Revendications

1. Dispositif (1) d'affûtage de couteaux rotatifs (3), en particulier de couteaux en forme de faucille ou de couteaux circulaires, en particulier pour des machines de découpe de produits alimentaires, comportant :
au moins un logement (5) pour un couteau rotatif (3), au niveau duquel le couteau rotatif (3) peut être monté,
au moins un outil d'affûtage (9),
dans lequel
l'outil d'affûtage (9) et le couteau rotatif (3) monté dans le logement (5) sont mobiles l'un par rapport à l'autre de telle sorte qu'un tranchant (11) s'étendant à la périphérie du couteau rotatif (3) peut être affûté par l'outil d'affûtage (9),
il est prévu un moyen de basculement (33) pour l'outil d'affûtage (9),
le moyen de basculement (33) est réalisé de telle sorte que l'outil d'affûtage (9) est mobile en basculement autour d'un axe de basculement (45) qui passe par un point d'affûtage (27) auquel le tranchant (11) et l'outil d'affûtage (9) se touchent pendant l'opération d'affûtage, et
le moyen de basculement (33) comprend au moins un palier de rotation (35), et l'axe de rotation (47) du palier de rotation (35) coïncide avec l'axe de basculement (45) de l'outil d'affûtage (9),
**caractérisé en ce que**
l'outil d'affûtage (9) comprend un disque d'affûtage (29) qui touche le tranchant (11) au point d'affûtage (27) et qui est mobile en basculement autour de l'axe de basculement (45), l'outil d'affûtage (9) comprenant en particulier un disque d'aiguisage (31) qui, conjointement avec le disque d'affûtage (29), constitue au moins approximativement un logement en forme de V pour le couteau rotatif (3) et touche le tranchant (11) à un point d'aiguisage (53), le disque d'aiguisage (31) étant mobile en basculement autour de l'axe de basculement (45) conjointement avec le disque d'affûtage (29) et/ou indépendamment du disque d'affûtage (31), et
**en ce que** le disque d'affûtage (29) et un disque d'aiguisage (31) sont montés chacun sur un bras basculant (37, 39), les deux bras basculants (37, 39) étant montés sur le palier de rotation (35) et étant mobiles en rotation autour de l'axe de rotation commun (47) du palier de rotation (35) pour le basculement commun du disque d'affûtage (29) et du disque d'aiguisage (31), et/ou
chaque bras basculant (37, 39) est mobile en rotation autour de l'axe de rotation commun (47) du palier de rotation (35) indépendamment de l'autre bras basculant respectif (37, 39) pour le basculement du disque d'affûtage (29) ou du disque d'aiguisage (31) indépendamment de l'autre disque respectif (29, 31).

2. Dispositif selon la revendication 1,
**caractérisé en ce que**
le point d'aiguisage (53) passe par l'axe de basculement (45).

3. Dispositif selon la revendication 1 ou 2,
**caractérisé en ce que**
le disque d'affûtage (29) et le disque d'aiguisage (31) sont agencés en décalage l'un par rapport à l'autre le long de l'axe de basculement (45), en particulier de telle sorte que le disque d'affûtage (29) et le disque d'aiguisage (31) sont directement en regard l'un de l'autre par rapport à l'axe de basculement (45).

4. Dispositif selon l'une des revendications précédentes,
**caractérisé en ce que**
le couteau rotatif (3) et l'outil d'affûtage (9) sont susceptibles d'être positionnés l'un par rapport à l'autre de telle sorte que l'axe de basculement (45) est orienté au moins approximativement tangentiellement par rapport à l'arête tranchante (23) qui se présente au point d'affûtage (27) respectif.

5. Dispositif selon l'une des revendications précédentes,
**caractérisé en ce que**
le disque d'affûtage (29) et un disque d'aiguisage (31) présentent un entraînement de basculement commun (49).

6. Dispositif selon l'une des revendications précédentes,
**caractérisé en ce que**
le dispositif comprend un moyen de mesure (13) conçu pour déterminer la trajectoire du tranchant (11) et une commande (15) réalisée pour utiliser la trajectoire déterminée du tranchant pour commander le mouvement relatif entre l'outil d'affûtage (9) et le couteau rotatif (3).

7. Dispositif selon la revendication 6,
**caractérisé en ce que**
le moyen de mesure (13) est réalisé pour détecter en tant que trajectoire du tranchant une arête tranchante (23) ou une autre caractéristique du couteau rotatif (3), qui correspond à la trajectoire du tranchant et/ou qui permet une déduction de la trajectoire du tranchant.

8. Dispositif selon la revendication 6 ou 7,
**caractérisé en ce que**
le moyen de mesure (13) fonctionne sans contact physique.

9. Dispositif selon l'une des revendications 6 à 8,
**caractérisé en ce que**
le moyen de mesure (13) présente une zone de détection (21) permettant de détecter exclusivement une portion (23a) du tranchant (11), et/ou
**en ce que** le moyen de mesure (13) et le couteau rotatif (3) sont mobiles l'un par rapport à l'autre de telle sorte que le tranchant (11) est mobile à travers la zone de détection (21) du moyen de mesure (3) en pouvant être détecté en continu ou localement.

10. Dispositif selon l'une des revendications 6 à 9,
**caractérisé en ce que**
le moyen de mesure (13) peut être déplacé.

11. Dispositif selon l'une des revendications 6 à 10,
**caractérisé en ce que**
le moyen de mesure (13) comprend une barrière lumineuse, en particulier une barrière lumineuse à fourche (17),
en particulier, le moyen de mesure (13) est réalisé pour déterminer la position à laquelle la barrière lumineuse (17) est interrompue par une portion (23a) du tranchant (11) ou est libérée, en tant que valeur de mesure pour la position de ladite portion (23a),
en particulier, le moyen de mesure (13) est réalisé pour utiliser l'ensemble de toutes les positions ainsi déterminées au moins comme base pour la trajectoire du tranchant.

12. Dispositif selon l'une des revendications 6 à 11,
**caractérisé en ce que**
le couteau rotatif (3) est déplaçable, et le moyen de mesure (13) est réalisé pour déterminer l'emplacement du couteau rotatif (3).

13. Dispositif selon l'une des revendications 6 à 12,
**caractérisé en ce que**
le couteau rotatif (3) est mobile en rotation autour d'un axe de rotation prévu pour le fonctionnement de coupe, et le moyen de mesure (13) est déplaçable linéairement de telle sorte que pour une multitude de positions de rotation du couteau rotatif, la position d'une portion (25a) du tranchant (11) du couteau rotatif (3) peut être déterminée à l'aide du moyen de mesure respectif (13).

14. Dispositif selon l'une des revendications 6 à 13,
**caractérisé en ce que**
il est prévu une mémoire (25) pour le stockage au moins temporaire d'au moins une trajectoire déterminée du tranchant.

15. Procédé d'affûtage de couteaux rotatifs (3), en particulier de couteaux en forme de faucille ou de couteaux circulaires, en particulier pour des machines de découpe de produits alimentaires, au moyen d'un dispositif (1) selon l'une des revendications précédentes, dans lequel
la trajectoire du tranchant (11) du couteau rotatif (3) est déterminée et le couteau rotatif (3) est ensuite affûté pendant un mouvement relatif entre le couteau rotatif (3) et un outil d'affûtage (9), et
le mouvement relatif entre le couteau rotatif (3) et l'outil d'affûtage (9) est commandé à l'aide de la trajectoire déterminée du tranchant.
